# EUROPEAN PATENT APPLICATION

(11) **EP 2 528 296 A1**
(43) Date of publication of application: **28.11.2012**
(21) Application number: 11167962.7
(22) Date of filing: 27.05.2011
(51) Int. Cl.: H04L 29/06, H04M 3/493

(54) **Methods and arrangements for interactive communication during call setup**

(71) Applicant: Telefonaktiebolaget LM Ericsson (publ), 164 83 Stockholm (SE)
(72) Inventor: Szijártó, Péter Tamás, 1031 Budapest (HU); Dosa, Istvan, 1211 Budapest (HU); Paller, Gábor, 1047 Budapest (HU); Holm, Jan, 80310 Gävle (SE)
(74) Representative: Ström & Gulliksson AB

(57) **Abstract**

Method and arrangement for interactive two-way communication session during the setup phase of a call known as early media between a first communication device (402,502,800) and second communication device (404,504,900) for an IMS network and exchanging information using Message Session Relay Protocol (MSRP) of the terminals are suitable. By conveying (202,304, S-418, S-516,607,708) interactive user interface information in the form of a widget or a link to said information, the first communication device may render data to request user input from the user of the first communication device. Based on communicated user input the call setup phase can be finalized using visual techniques in a less time-consuming way, as compared to interactive voice responses systems with their audio interfaces.

## Description

### TECHNICAL FIELD

This disclosure pertains in general to the field of communication, and more particularly to methods and communication devices for interactive communications during a. call setup phase of a call,

### BACKGROUND

Nowadays, telecommunication services often involve automated dialogs during call setup of a call. A typical and popular application of this type is Interactive Voice Response (IVR). Within IVR a user communicates with an automated system by means of Dual Tone Multiple Frequency (DTMF) tones and the automated system responds with voice prompts.

By using an IVR system the user may have to make a numbers system of selections in order to reach a desired service application. This is time-consuming since each voice prompt requires a certain time to vocally present the options available to the user. The user is typically also needed to navigate through a number of levels of voice prompts in order to reach the final destination of the desired service application. This can certainly be annoying to an efficient user.

In addition to the IVR system being time-consuming to use, inputting user interaction in the form of text and figures is not an easy task.

The user interaction interface is clumsy. Apart from inputting the most simple form of user interaction, for instance a "Yes" or "No" answer, or choosing one of multiple selection answers, inputting data is not trivial. For instance inputting a text string, such as a name, is a challenge to a user and often requires an understanding of the way to input data, since pure intuition typically fail.

There is thus a need for a novel method to exchange information during call setup phase of a call.

### SUMMARY

An object of the present disclosure is to provide an interactive two-way communication session, rendering interactive user interface information to be presented to a user.

According to one aspect of this disclosure, a method in a first communication device of enabling establishment of a call with a second communication device over a communications network, within a call setup phase of the call prior to the call being established, is provided. The method comprises receiving at least a link to interactive user interface information from said second communication device, and rendering call related data of the interactive user interface information, for the purpose of requesting user input. The method also comprises obtaining user input as a response to said user input request, and sending said obtained user input to the second communication device, during the call setup phase.

The receiving of at least a link to interactive user interface information from said second communication device of the method in a first communication device may comprise receiving a link to the interactive user interface information, or receiving the interactive user interface information.

The method in a first communication device may also comprise sending a call session invitation to the second communication device.

The call session invitation in sending a call session invitation may comprise indicating, to the second communication device, a type of interactive call application that is accepted by the first communication device and a requested type of protocol for the interactive call application.

The requested type of protocol for the interactive call application in the method in a first communication device may comprise a Message Session Relay protocol or Session Initiation Protocol INFO signalling.

According to another aspect of this disclosure, a first communication device for enabling establishment of a call with a second communication device over a communications network, within a call setup phase of the call prior to the call being established, is provided. The first communication device comprises transceiving means that is configured to receive at least a link to interactive user interface information from said second communication device. In addition, the first communication device comprises rendering means that is configured to render call related data of the interactive user interface information, for the purpose of requesting user input, and input/output means that is configured to present the rendered can related data and to obtain user input as a response to the user input request. The transceiving means is also configured to send user input to said second communication device.

According to yet another aspect of this disclosure, a method in a second communication device of enabling establishment of a call with a first communication device over a communications network, within a call setup phase of the call prior to the call being established, is provided. The method comprises receiving a call session invitation from said first communication device, and sending at least a link to interactive user interface information to said first communication device, based on said received call session invitation, enabling rendering of call related data of the interactive user interface information by said first communication device. In addition, the method comprises receiving user input from said first communication device, during the call setup phase.

The call session invitation in the receiving a call session invitation of the method in a second communication device may comprise indicating a type of interactive call application that is accepted by said first communication device and a requested type of protocol for the interactive call application.

The method in a second communication device may further comprise identifying the type of interactive call application that is accepted by said first communication device and identifying the type of protocol for the interactive call application, and wherein sending at least a link to interactive user information is performed by using said identified type of interactive call application and by using said identified protocol.

The sending at least a link to interactive user interface information to said first communication device in the method in a second communication device may comprise sending a link to interactive user interface information or sending the interactive user interface information.

According to yet another aspect of this disclosure, a second communication device for enabling establishment of a call with a first communication device over a communications network, within a call setup phase of the call prior to the call being established, is provided. The second communication device comprises transceiving means configured to receive a call session invitation from said first communication device, as well as identifying means configured to identify a type of interactive call application from the call session invitation, which interactive call application is accepted by said first communication. The transceiving means is also configured to send at least a link to interactive user interface information to said first communication device by using the identified type of call application, and to receive user input from said first communication device, for evaluating the call.

Embodiment of the present invention brings the following advantages:
By providing a less time-consuming and less user-annoying call setup phase, a call can be more rapidly set up as compared with the prior art. Another advantage of this novel call setup phase is that it improves the user experience. In addition it provides an easier method to select a certain option as compared to a traditional IVR system, since the variety of user options are visually and simultaneously presented to the user.

It is further advantageous to present a web-like user interaction model which certainly contrasts to clumsy DTMF interactions that have been available for quite some time.

### BRIEF DESCRIPTION OF DRAWINGS

These and other aspects, features and advantages of which this disclosure is capable of, will be apparent and elucidated from the following description of embodiments of this disclosure, reference being made to the accompanying drawings, in which
Fig. 1 schematically illustrates a communication network related to this disclosure;
Figs. 2, 3, 6 and 7 schematically illustrate a flow-chart of a method according to some embodiments of this disclosure;
Figs. 4 and 5 present, signalling-type diagrams related to embodiments of this disclosure;
Figs. 8 and 9 schematically present communication devices according to embodiments of this disclosure; and
Fig. 10 illustrates one example of rendered call related data according to one embodiment of this disclosure.

### ABBREVIATIONS.

- DTMF: Dual Tone Multiple Frequency
- IVR: Interactive Voice Response
- IMS: Internet protocol Multimedia Subsystem
- MSRP: Message Session Relay Protocol
- SDP: Session Description Protocol
- SIP: Session Initiation Protocol

### DETAILED DESCRIPTION

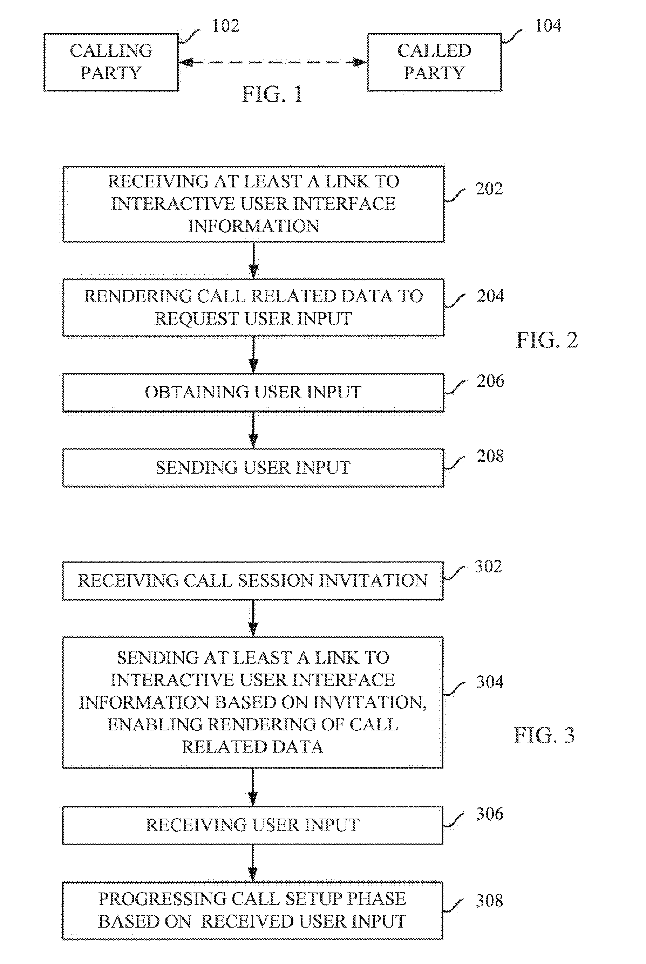

One concept of this disclosure is to use an interactive two-way communication during the call setup of a call between a first communication device and a second communication device, in order to convey information used for the establishment of said call. Figure 1 schematically presents a first communication device 102 communicating with a second communication device 104. The first communication device may be an Internet Protocol Multimedia subsystem terminal. The second communication device may be either an Internet Protocol Multimedia subsystem terminal or a telecommunications system such as an Interactive Voice Response system, or a call processor providing telecommunications services, for example barring, forwarding, call transfer to mention few. The telecommunications system may alternatively also be a voicemail system for the second communication device.

Figure 2 presents a general flow chart of method steps of a method within a first communication device of enabling establishment of a call with a second communication device over a communication network, within a cal setup phase of the call prior to the call being established. The method comprises receiving 202 at least a link to interactive user interface information from the second communication device. The method further comprises rendering 204 call related data of the interactive user interface information, for the purpose of requesting user input, and obtaining 206 user input as a response to said user input request. The method further comprises sending 208 said obtained user input to the second communication device, during the call setup phase.

It is noticed that the first communication device refers to a calling communication device, whereas the second communication device refers to a called communication device.

The method may further comprise sending S-410, S-510, 602 a call session invitation to the second communication device 104. The call session invitation may be a Session Invitation Protocol (SIP) INVITE.

The interactive user interface information in the receiving at least a link to interactive user interface information may comprise Hyper Text Mark-up Language code or a World Wide Web Consortium widget.

Rendering of said call related data may comprise visually presenting said call related data by the communication device of the first communication device.

As will be described down below, the method may further comprise receiving additional interactive user interface information from said second communication device, rendering additional call related data of the additional interactive user interface information, obtaining additional user input, and sending said obtained additional user input to the second communication device.

A method in the communication device of the called communication device will now be described in general terms.

Figure 3 presents a flow chart of method steps of a method within a second communication device 104 of enabling establishment of a call with a first communication device 102 over a communications network, within a call setup phase prior to the call being established. The method comprises receiving 302 a can session invitation from the first communication device 102. The method further comprises sending 304 at least a link to interactive user interface information to said first communication device 102, based on said received call session invitation, enabling rendering of call related data of the interactive user interface information by said first communication device 102. The method also comprises receiving 306 user input from said first communication device 102, during the call setup phase.

The method may also comprise progressing 308 the call setup phase based on the received user input from the first communication device 102.

It is noticed that the second communication device refers to a called communication device, whereas the first communication device refers to a calling communication device.

The call session invitation in the receiving 302 a call session invitation from the first communication device 102, may comprise a Session Initiation Protocol INVITE.

The method in a second communication device 104 may further comprise receiving an additional call session invitation from the first communication device, sending additional at least a link to interactive user interface information to said first communication device, based on said received additional call session invitation, enabling rendering of call related data of the additional interactive user interface information by said first communication device, and receiving additional user input from said first communication device, during the call setup phase.

The interactive user interface information in the sending at least a link to interactive user interface information may comprise Hyper Text Mark-up Language code or a World Wide Web Consortium widget.

Down below, embodiments of this disclosure will be presented in more detail.

It is noted that "party" in "first communication device" and "second communication device" may refer to either the "communication device" of the "first communication device" or "second communication device", or to a "participant" of the call.

When a first communication device that is calling is in the call setup phase, i.e. prior to a call with a second communication device is established, and receives early media from the second communication device, for instance in the form of a ring-back tone or an announcement, an additional interactive two-way communication session is negotiated, By using this interactive two-way communication session the first communication device and the second communication device typically accomplish interactive exchange during the call setup phase for the establishment of the call. As will become more clear down below, the interactive two-way communication session may be either a Message Session Relay Protocol (MSRP) media stream or Session Initiation Protocol (SIP) INFO signalling.

An interaction description format for interactive user interface information to be sent to the first communication device, may be used. Examples of this interaction description format are Hyper Text Mark-up Language (HMTL) and W3 Consortium widget, which may hence be used to send interactive user interface information or a link to said interactive user interface information to the first communication device.

To further speed up subsequently following call setups between the first and the second communication devices, said interactive user interface information or links to said interactive user interface information may be cached on the call participating devices.

During the interactive two-way communication session the first communication device may receive information regarding the call, in the form of interactive user interface information or in the form of a link to interactive user interface information. This information may comprise which services are activated by second communication device. The first communication device may communicate with the second communication device in the form of a telecommunications system or an IMS terminal, by using the interactive user interface information media stream or by exchanging signalling messages.

Again, the interactive user interface information media stream or the signalling messages delivered in the context of session setup process can be used by the second and the first communication devices to communicate before the call is established. The second communication device's presence status can alternatively be conveyed.

In the following a signalling-type diagram of events and messages which are sent during the call setup phase of a call between a first communication device and a second communication device will be discussed.

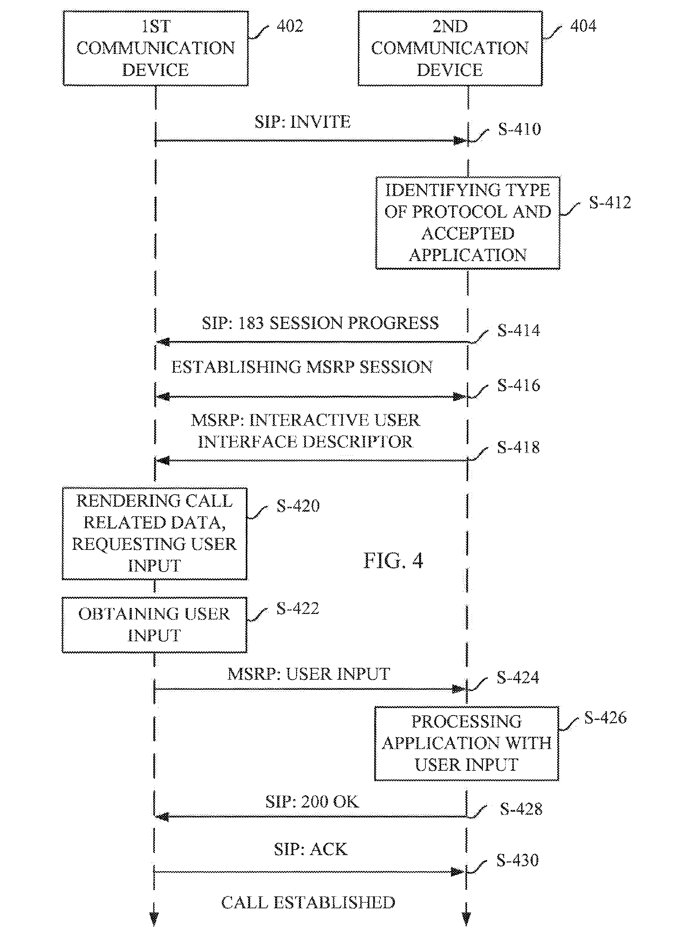

Figure 4 presents said signalling-type diagram between a first communication device 402 and a second communication device 404, according to some embodiments of this disclosure. The first communication device 402 is typically a calling communication device, whereas the second communication device 404 is typically a called communication device.

In step S-410 the first communication device 402 sends a Session Initiation Protocol (SIP) INVITE to the second communication device 404. It can be pointed out that the SIP INVITE is an example of a call session invitation as sent by the first communication device,

The second communication device 404 may then identify S-412 the type of protocol for communication with the first communication device 402 and the application that is accepted by the first communication device 402. Having access to the type of protocol and accepted application, the second communication device 404 may send S-414 a SIP 183 session progress, being one example of a call session invitation response, to the first communication device 402.

The first communication device 402 and the second communication device 404 may now negotiate with each other and establish S-416 a Message Session Relay Protocol (MSRP) session. By establishing a MSRP session an interactive dialog media stream is created. This interactive dialog media stream may be used by the first and second communication devices to communicate before the call is established or to convey the second communication device's presence status to the first communication device.

At the time when the second communication device, which may be an IVR system, responds with an announcement such as ring-back tones, the interactive two-way communication session, in this case the MSRP media stream, is typically established,

Having established the MSRP session, the second communication device 404 may send S-418 interactive user interface information to the first communication device 402. One example of interactive user interface information that is sent to the first communication device is W3C widgets.

It is pointed out that W3C widgets may also be communicated from the first communication device to the second communication device, according to an alternative embodiment.

The interactive user interface information may typically comprise call related data.

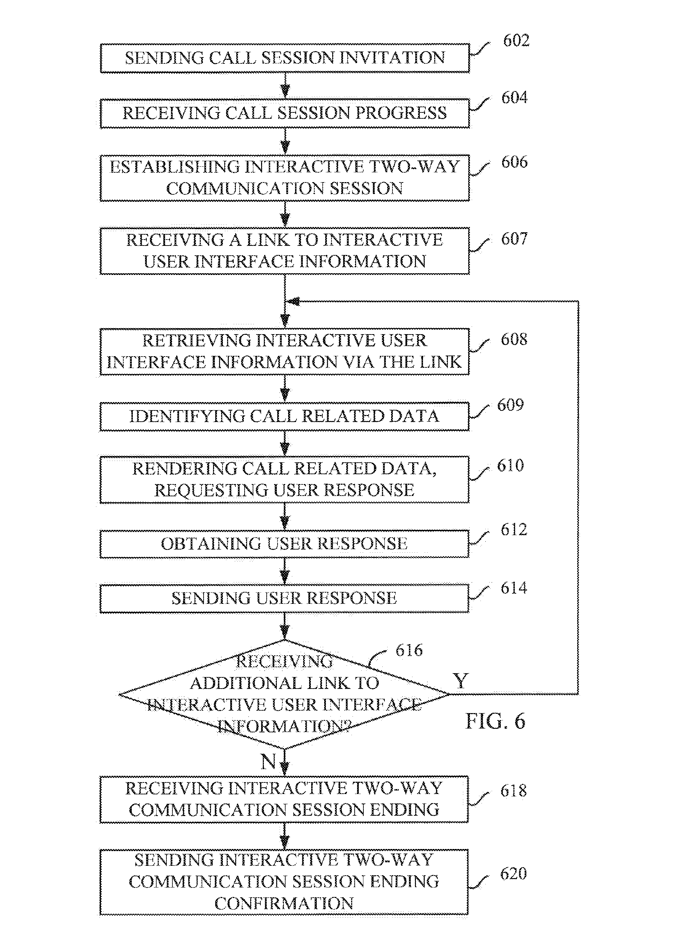

It can be mentioned that the presentation of the setup phase of figure 4, comprises interactive user interface information as such. In association with figure 6, embodiments comprising a link to interactive user interface information are presented.

The first communication device 402 may now render S-420 the call related data of the interactive user interface information. As a result, a widget may be presented on the first communication device. The widget typically offers options and requests user input from the user of the first communication device.

By rendering the call related data the first communication device 402 requests user input from the user of the first communication device.

Advanced interaction models, for instance text fields, check boxes, etc. are commonly used in the Web community and may well be used as the widget can run locally on the first communication device.

The user of the first communication device may thus interact with the interactive communication session by for instance selecting a pull-down menu item or clicking on a button. In this way the first communication device 402 may thus obtain S-422 user input.

When the user interacts the logic in the widget may send interaction results to the second communication device that executes a service logic using the MSRP session from the first communication device to the second communication device, for example the IVR system.

User input may thus be communicated S-424 to the second communication device 404 over the MSRP session.

Having received the user input the second communication device 404 may now process S-426 the application by using the received user input. By processing the user input the second communication device may determine that the interactive two-way communication session shall continue, since more information is required in order to establish the call.

Alternatively, by processing the application the MSRP session may be terminated and a SIP 200 OK message sent to the first communication device 402. By sending the SIP 200 OK message the second communication device 404 indicates that SIP session is successful and that the call setup phase is about to end.

The first communication device 402 may then send S-430 a SIP ACK by which the call setup phase is ended. Having successfully ended the call setup phase, the call between the first communication device 402 and the second communication device 404 may now be established.

According to other embodiments of the present disclosure a first communication device and a second communication device may communicate with each other during a call setup phase by exchanging signalling messages with one another.

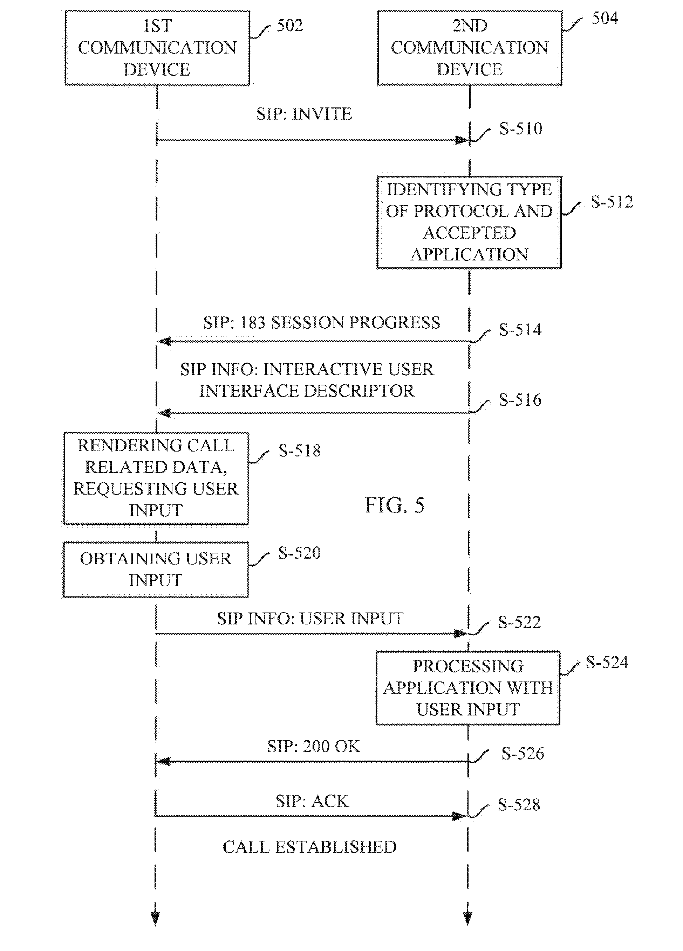

Similarly to figure 4, figure 5 presents a signalling-type diagram between a first communication device 502 and a second communication device 504. Since the signalling S-510, S-512 and S-514 are similar or identical to the signalling S-410, S-412 and S-414, respectively, reference is made to figure 4 and the associated text, for signalling S-510, S-512 and S-514 of figure 5.

The second communication device 504 thus sends a SIP 183 session progress to the first communication device 502. The second communication device 504 may now continue SIP signalling by sending S-516 a SIP INFO message comprising interactive user interface information,

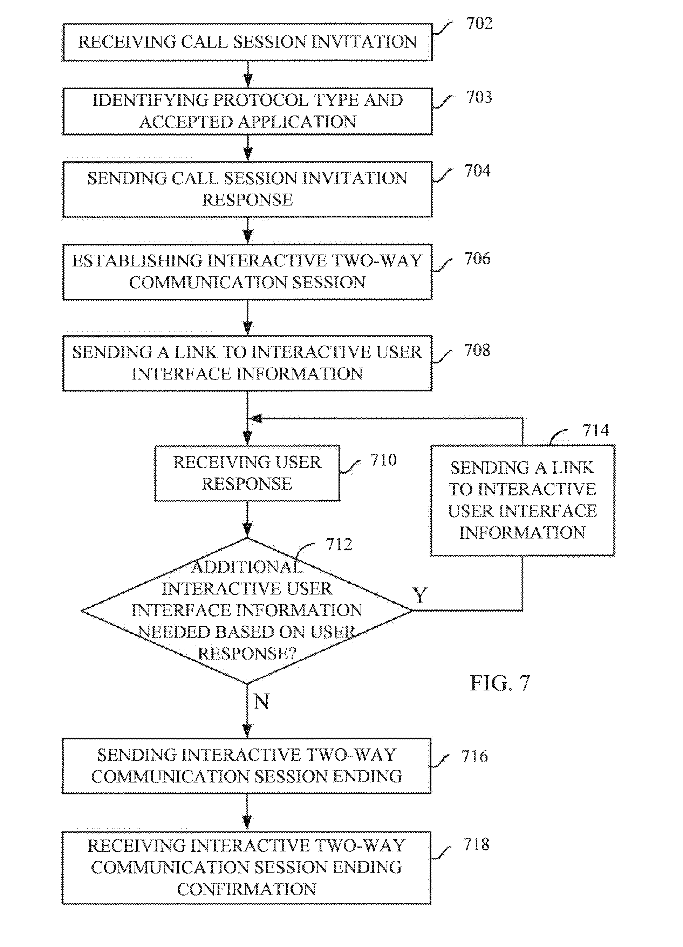

It is mentioned that the presentation of the setup phase of figure 5, comprises interactive user interface information as such. In association with figure 7, embodiments comprising a link to interactive user interface information are presented herein.

By continuing SIP signalling the first communication device 502 and the second communication device 504 can communicate with each other.

Since signaling S-518 and S-520 are similar or the same as signalling S-420 and S-422 in figure 4, reference is here made to figure 4 and the text associated with signalling S-420 and S-422.

When the first communication device 502 has obtained user input the calling part may send S-522 the user input by SIP INFO signalling to the second communication device 504.

With the user input accessible the second communication device 504 may now process S-524 the application by using the received user input.

By processing the user input the second communication device may determine that the interactive two-way communication session shall continue, since more information is required in order to establish the call.

Alternatively, having processed the application a SIP 200 OK message may be sent S-526 to the first communication device 502. By sending the SIP 200 OK message the second communication device 504 indicates that SIP session is successful and that the call setup phase is about to end.

The first communication device 502 may then send S-528 a SIP ACK by which the call setup phase is indeed ended. Having successfully ended the call setup phase, the call between the first communication device 502 and the second communication device 504 may now be established.

It should be emphasized that although the second communication device may be a telecommunications system, it may alternatively be a IMS terminal. For instance a caller Alice may call Bob. Bob is however on a meeting. Bob sees the incoming call, inputs user input as a response to the rendered call related data and selects the "I am on a meeting, I will call you back" as a pre-stored message and then hangs up. Alice is then presented the message in the called device and will know why Bob dropped her call. The message sent from the first communication device is here rendered in the communication device of the second communication device. Alice may now input further user input and send another message to Bob. In the calling device said another message will now be rendered and presented to Bob. It is thus clear that messages may be rendered in both the communication device of the calling as well as the second communication device. Needles to say, these are typically different messages.

Figure 6 schematically illustrates method steps in a first communication device according to embodiments of a method of the present disclosure for enabling establishment of call between the first communication device and a second communication device. The first communication device may here be calling communication device, whereas the second communication device may here be called communication device.

Down below, similar to above, "party" is again being used to refer either to a "communication device" of the "first communication device" or "second communication device", or to a "participant" of the call.

The method may start by 602 the first communication device sending a call session invitation to the second communication device, The method comprises receiving 604 a call session progress from the second communication device. Thereafter, the method comprises establishing 606 a two-way communication session between said first communication device and the second communication device. This may be accomplished by negotiating a MSRP media stream or by using signalling messages such as SIP INFO signalling.

The first communication device then receives 607 a link to interactive user interface information from the second communication device. In 608, the first communication device retrieves interactive user interface information via the obtained link.

In 609, the first communication device identifies call related data. The interactive user interface information as such comprises data related to the call between the first communication device and the second communication device. This call related data may comprise user options and/or fields for obtaining user input.

The method further comprises rendering 610 the call related data whereby user input is requested from the user of the first communication device. By rendering call related data the call related data is presented visually to the user of the first communication device. The user of the first communication device is typically the caller.

Thus, user input is then obtained 612 from the caller, after which the user input is sent 614 to the second communication device over the established two-way communication session.

Having sent the user input, the method comprises determining 616 whether an additional link to interactive user interface information is received, or not.

In the case no additional link to interactive user interface information is received, the first communication device may receive 618 an interactive two-way communication session ending message from the second communication device. The method may then comprise sending 620 interactive two-way communication session ending confirmation to the second communication device.

In case an additional link to interactive user interface information is received 616 the method continues by retrieving 608 interactive user interface information via the received link, and identifying 609 call related data. Thereafter the first communication device renders 610 the additional call related data requesting user response. Thereafter, obtaining user response 612 and sending user response 614 may follow, after which it is again determined 616 whether an additional link to interactive user interface information is received or not.

Figure 7 schematically illustrates method steps in a called communication device according to embodiments of a method of the present disclosure for enabling establishment of call between said called communication device and a calling communication device. A called communication device and a second communication device may be used interchangeably. Similarly, a calling communication device and first communication device may be used interchangeably.

The method comprises receiving 702 a call session invitation from the first communication device. The method then comprises identifying 703 a protocol type supported by the calling communication device and an application accepted by said calling communication device. Then a call session invitation response is sent 704 by the second communication device to the first communication device. An interactive two-way communication session is now established by performing negotiations 706 between the first communication device and the second communication device. As mentioned above this may be either a MSRP media stream or SIP INFO signalling.

Then, the method comprises sending 708 a link to interactive user interface information to the first communication device.

The second communication device participates in establishing 708 an interactive two-way communication session during the call setup phase.

The second communication device then receives 710 user response being a response to a request as presented by rendering call related data at the first communication device.

It is then determined 712 whether an additional link to interactive user interface information is needed based on the received user response, or not.

In case an additional link to interactive user interface information is needed the second communication device sends 714 said additional link to interactive user interface information descriptor to the first communication device. Based on this additional link to interactive user interface information, additional user response is received 710. Thereafter, it is again determined 712 whether an additional link to interactive user interface descriptor is needed based on the received user response, or not.

In case no additional link to interactive user interface information is needed, the second communication device may send 716 an interactive two-way communication session ending message. Subsequently, the second communication device may receive 718 from the first communication device an interactive two-way communication session ending confirmation.

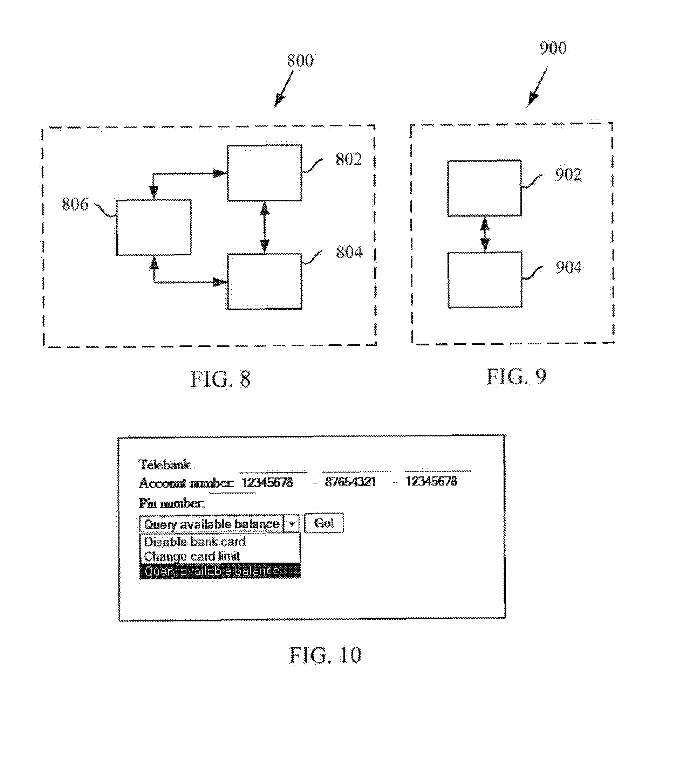

Figure 8 schematically presents a first communication device 800 for enabling establishment of a call with a second communication device 104, 404, 504, 900 over a communications network, within a call setup phase of the call prior to the call being established, The first communication device comprises transceiving means 802 configured to receive at least a link to interactive user interface information from said second communication device 104, 404, 504, 900 and rendering means 804 configured to render call related data of the interactive user interface information, for the purpose of requesting user input. In addition, the first communication device 800 also comprises input/output means 806 that is configured to present the rendered call related data and to obtain user input as a response to the user input request. The transceiving means is further configured to send user input to said second communication device 1 04, 404, 504,900.

Figure 9 schematically also presents a second communication device 900 for enabling establishment of a call with a first communication device 102, 402, 502, 800 over a communications network, within a call setup phase of the call prior to the call being established. The second communication device comprises transceiving means 902 that is configured to receive a call session invitation from said first communication device. In addition, the second communication device comprises identifying means 904 that is configured to identify a type of interactive call application from the call session invitation, which interactive call application is accepted by said first communication. Also, the transceiving means 902 is further configured to send at least a link to interactive user interface information to said first communication device 102, 402, 502, 800 by using the identified type of call application, and to receive user input from said first communication device 102, 402, 502, 800, for evaluating the call.

Finally, figure 10 illustrates one example of rendered call related data, which call related data is comprised in the interactive user interface information as sent by a second communication device to a first communication device for requesting user input needed to establish the call between the first communication device and the second communication device. Figure 10 illustrates an example of user options or pull-down menu items presented to the user, as well as an open data field requesting user input.

In the following a few detailed examples of SIP signalling code will be briefly presented pertinent to the present disclosure. In the following examples the second communication device typically comprises an IVR system, whereas the first communication device may be a IMS terminal.

As mentioned above the call session invitation may be a SIP INVITE signalling message.

It can be pointed out that the SIP session is initiated by the first communication device by sending the SIP INVITE signalling message to the second communication device.

Down below a SIP INVITE signalling message is presented. In the SDP body of said SIP INVITE signalling message, it indicates that the first communication device is able to accept interactive session information on the early dialog, that is during the call setup phase.

As presented below it is indicated the type of interactive two-way communication session that is accepted by the first communication device. It is also seen that the accepted type of application for the interactive two-way communication is specified as "interactivesession".

It should be pointed out that the application "interactivesession" is a hypothetical media type that advertises the first communication device's ability to support an interactive communication.

Moreover, the type of protocol that the first communication device requests to use for the interactive two-way communication session application is indicated in the message header of the SIP INVITE signalling message. In the case below, it is indicated the first communication device wishes to establish a MSRP session, over which the interactive session information is to be sent.

It may be noted that beside a media line of the MSRP session, normal voice or video media lines may be present that are related to the information or media to be communicated over the MSRP session.

Since the details of SIP signalling code is well-known to the artisan, a further analysis is not included in this disclosure.
INVITE sip:ivr@biloxi.example.com SIP/2.0
To: <sip:ivr@biloxi.example.com>
From: <sip:alice@atlanta.example.com>;tag=786
Call-ID: 3413an89KU
Content-Type: application/sdp

c=IN IP4 atlanta.example.com
m=message 7654 TCP/MSRP*
a=accept-types:application/interactivesession
a=path:msrp://atlanta.example.com:7654/jshA7weztas;tcp
m=audio 24580 RTP/AVP 0
a=sendrecv
a=rtpmap:0 PCMU/8000
a=ptime:20

In the response to the SIP INVITE, the second communication device may send a SIP 183 Session Progress message, in which the accepted type of application as well as the type of protocol to be used in the interactive two-way communication session application are acknowledged. A Sip 183 Session Progress signalling message may be formulated as:
SIP/2.0 183 Session Progress
To: <sip:ivr@biloxi.example.com>
From: <sip:alice@atlanta.example.com>;tag=786
call-ID: 3413an89KU
Content-Type: application/sdp
c=IN IP4 ivr.example.com
m=message 8976 TCP/MSRP *
a=accept-types:application/interactivesession
a=path:msrp://ivr.example.com:8976 /jshA7weztas;tcp
m=audio 34123 RTP/AVP 0
a=sendrecv
a=rtpmap:0 PCMU/8000
a=ptime:20

Having sent a SIP 183 Session Progress signalling message, the IVR system may respond to the SIP INVITE by a message through which the MSRP session is negotiated and established. An example of MSRP interaction code will be presented below. Similar to above, as MSRP protocol is well-known to the artisan, a brief presentation is provided.

The second communication device in the form of the IVR system may now send a widget to the first communication device's terminal. This MSRP communication may look like this:
MSRP a786hjs2 SEND
   To-Path: msrp://ivr.example.com:8976/jshA7weztas;tcp
   From-Path: msrp://atlanta.example.com:7654/kjhd37s2s20w2a;tcp
   Message-ID: 87652491
   Byte-Range: 1-1236/1236
   Content-Type: application/widget
      .... Widget archive bytes ....
   -------a786hjs2$
MSRP a786hjs2 200 OK
   To-Path: msrp://atlanta.example.com:7654/jshA7weztas;tcp
   From-Path: msrp://ivr.example.com:8976/kjhd37s2s20w2a;tcp
   -------a786hjs2$

The user of the first communication device, that is the caller, interacts with the widget by Inputting user input. Thereafter the widget communicates said user input or response to the IVR system.
MSRP a786hjs2 SEND
   To-Path: msrp://atlanta.example.com:8976/kjhd37s2s20w2a;tcp
   From-Path: msrp://ivr.example.com:7654/jshA7weztas;tcp
   Message-ID: 87652491
   Byte-Range: 1-100/100
   Content-Type: application/x-www-form-urlencoded
      action=send_subscribername&subscribername=John+Doe
      -------a786hjs2$
MSRP a786hjs2 200 OK
   To-Path: msrp://atlanta.example.com:8976/jshA7weztas;tcp
   From-Path: msrp://ivr.example.com:7654/kjhd37s2s20w2a;tcp
   -------a786hjs2$

As mentioned above, the interactive two-way communication session may be implemented by using signalling messages sent and received between the communicating devices during the call session setup. These signalling messages can be sent between the first communication device and a telecommunication system or directly between the first communication device and the second communication device.

In the following examples of SIP signalling messages between a first communication device in the form of an IMS terminal and an automated telecommunication system, representing the second communication device, is presented. These messages may be realized in the form of SIP INFO signalling messages.

The first communication device initiates a SIP session by sending an INVITE to the telecommunication system. Similar to above, in the Accept header of the INVITE request, it is indicated that the communication device of the first communication device is able to accept interactive communication session on the early dialog.
INVITE sip:ivr@biloxi.example.com SIP/2.0
   To: <sip:ivr@biloxi.example.com>
   From: <sip:alice@atlanta.example.com>;tag=786
   Call-ID: 3413an89KU
   Content-Type: application/sdp
   Accept: application/widget

   c=IN IP4 atlanta.example.com
   m=audio 24580 RTP/AVP 0
   a=sendrecv
   a=rtpmap:0 PCMU/8000
   a=ptime:20

The early dialog is established between the communication device of the first communication device and the automated telecommunication system. It is noted that the message(s) establishing the early dialog are not shown.

Once the early dialog is established, the automated telecommunication system detects that the first communication device is able to support and receive an interactive two-way communication session and such a dialog is sent using an INFO message.
INFO sip:alice@atlanta.example.com SIP/2.0
   Via: SIP/2.0/UDP alice.uk.example.com:5060
   From: <sip:ivr@biloxi.example.com>; tag=123
   To: <sip:alice@atlanta.example.com>;tag=786
   Call-ID: 3413an89KU
   CSeq: 5 INFO
   Content-Length: 241
   Content-Type: application/widget
      .... Widget archive bytes ....

The first communication device renders the widget, after which the user of the first communication device is requested to interact with the widget by inputting user input. The result of the interaction, that is the user input is then sent to the automated telecommunication system using INFO messages from the first communication device.
INFO sip:ivr@biloxi.example.com SIP/2.0
   Via: SIP/2.0/UDP alice.uk.example.com:5060
   To: <sip:ivr@biloxi.example.com>; tag=123
   From: <sip:alice@atlanta.example.com>;tag=786
   Call-ID: 3413an89KU
   CSeq: 6 INFO
   Content-Length: 51
   Content-Type: application/x-www-form-urlencoded
   action=send_subscribername&subscribername=John+Doe

It must he clarified that conveying interactive two-way communication information on the signalling channel may be used also if the communication device is a terminal such as an IMS terminal, and not an automated telecommunication system.

### Embodiments of this disclosure have the following advantages:

By providing a less time-consuming and less user-annoying call setup phase, a call can be more rapidly set up as compared with the prior art. Another advantage of this novel can setup phase is that it improves the user experience. In addition it provides an easier method to select a certain option as compared to a traditional IVR system, since the variety of user options are visually and simultaneously presented to the user. It is further advantageous to present a web-like user interaction model which certainly contrasts to clumsy DTMF interactions that have been available for quite some time.

It must be emphasized that this disclosure may be varied in many ways.

The elements of an embodiment of this disclosure may be physically, functionally and logically implemented in any suitable way. Indeed, the functionality may be implemented in a single means, in a plurality of means or as part of other functional means or units. As such, this disclosure may be implemented in a single means, or may be physically and functionally distributed between different means and processors.

It is made clear that presented embodiments may well be combined forming new embodiments not explicitly described herein.

In the claims, the term "comprises/comprising" does not exclude the presence of other elements or steps. Additionally, although individual features may be included in separate claims, these may be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

Although this disclosure has been described above with reference to (a) specific embodiment(s), it is not intended to be limited to the specific form set forth herein. Rather, this disclosure is limited only by the accompanying claims and, other embodiments than the specific above are equally possible within the scope of these appended claims.

## Claims

1. A method in a first communication device (402, 502, 800) of enabling establishment of a call with a second communication device (404, 504, 900) over a communications network, within a call setup phase of the call prior to the call being established, the method comprising:
- receiving (202, S-418, S-516, 607) at least a link to interactive user interface information from said second communication device (404, 504, 900),
- rendering (204, S-420, S-518,610) call related data of the interactive user interface information, for the purpose of requesting user input,
- obtaining (206, S-422, S-520, 612) user input as a response to said user input request, and
- sending (208, S-424, S-522, 614) said obtained user input to the second communication device, during the call setup phase.

2. The method in a first communication device (402, 502, 800) according to claim 1, wherein the receiving (202, S-418, S-516, 607) at least a link to interactive user interface information from said second communication device comprises receiving a link to the interactive user interface information, or receiving the interactive user interface information.

3. The method in a first communication device (402, 502, 800) according to claim 1 or 2, wherein said call related data in the rendering (204, S-420, S-518, 610) call related data comprises user options and/or fields for obtaining user input.

4. The method in a first communication device (402, 502, 800) according to any one of claim 1-3, further comprising sending (208, S-424, S-522, 614) a call session invitation to the second communication device (104, 404, 504, 900).

5. The method in a first communication device (402, 502, 800) according to claim 4, wherein the call session invitation in sending (208, S-424, S-522, 614) a call session invitation comprises indicating, to the second communication device, a type of interactive call application that is accepted by the first communication device and a requested type of protocol for the interactive call application.

6. The method in a first communication device (402, 502, 800) according to claim 5, wherein the requested type of protocol for the interactive call application comprises Message Session Relay protocol or Session Initiation Protocol INFO signalling.

7. A first communication device (402, 502, 800) for enabling establishment of a call with a second communication device (404, 504, 900) over a communications network, within a call setup phase of the call prior to the call being established, the communication device comprising:
- transceiving means (802) configured to receive at least a link to interactive user interface information from said second communication device,
- rendering means (804) configured to render call related data of the interactive user interface information, for the purpose of requesting user input, and
- input/output means (806) configured to present the rendered call related data and to obtain user input as a response to the user input request,
wherein the transceiving means further is configured to send user input to said second communication device.

8. The first communication device (402, 502, 800) according to claim 7, where said communication device is a Internet Protocol Multimedia Subsystem phone.

9. A method in a second communication device (404, 504, 900) of enabling establishment of a call with a first communication device (402, 502, 800) over a communications network, within a call setup phase of the call prior to the call being established, the method comprising:
- receiving (302, S-410; S-510, 702) a call session invitation from said first communication device,
- sending (304, S-418, S-516, 708) at least a link to interactive user interface information to said first communication device, based on said received call session invitation, enabling rendering of call related data of the interactive user interface information by said first communication device, and
- receiving (306, S-424, S-522, 710) user input from said first communication device, during the call setup phase.

10. The method in a second communication device (404, 504, 900) according to claim 9. wherein the call session invitation in the receiving (302, S-410, S-510, 702) a call session invitation comprises indicating a type of interactive call application that is accepted by said first communication device and a requested type of protocol for the interactive call application.

11. The method in a second communication device (404, 504, 900) according to claim 10, further comprises identifying (S-412, S-512, 703) the type of interactive call application that is accepted by said first communication device and identifying the type of protocol for the interactive call application, and wherein sending (304, S-418, S-516, 708) at least a link to interactive user interface information is performed by using said identified type of interactive call application and by using said identified protocol.

12. The method in a second communication device (404, 504, 900) according to any one of claim 9-11, wherein the sending (304, S-418, S-516, 708) at least a link to interactive user interface information to said first communication device (402, 502, 800), comprises sending a link to interactive user interface information or sending the interactive user interface information.

13. The method in a second communication device (404, 504, 900) according to any one of claim 9-12, wherein the interactive user interface information in the sending (304, S-418, S-516, 708) at least a link to interactive user interface information comprises call related data in the form of user options and/or fields for obtaining user input.

14. A second communication device (404, 504, 900) for enabling establishment of a call with a first communication device over a communications network, within a call setup phase of the call prior to the call being established, the second communication device comprising:
- transceiving means (902) configured to receive a call session invitation from said first communication device, and
- identifying means (904) configured to identify a type of interactive call application from the call session invitation, which interactive call application is accepted by said first communication,
wherein the transceiving means further is configured to send at least a link to interactive user interface information to said first communication device by using the identified type of call application, and to receive user input from said first communication device, for evaluating the call.

15. The second communication device (404, 504, 900) according to claim 14, where said communication device comprises a telecommunications system or an Internet Protocol Multimedia Subsystem phone.

16. The second communication device (404, 504, 900) according to claim 15, where said telecommunications system comprises an Interactive Voice Response system or a voicemail system.
